# EUROPÄISCHE PATENTSCHRIFT

(11) **EP 0 816 188 B1**
(45) Veröffentlichungstag und Bekanntmachung des Hinweises auf die Patenterteilung: **14.11.2001**
(21) Anmeldenummer: 97106881.2
(22) Anmeldetag: 25.04.1997
(51) Int. Cl.: B60R 22/46

(54) **Auslöseschaltung für ein Insassen-Rückhaltesystem**
Firing circuit for a occupant restraint system
Circuit de déclenchement pour système de rétention d'un occupant

(30) Priorität: 22.06.1996 DE 19625004
(43) Veröffentlichungstag der Anmeldung: 07.01.1998
(73) Patentinhaber: DaimlerChrysler AG, 70567 Stuttgart (DE)
(72) Erfinder: Müller, Manfred, 73779 Deizisau (DE); Rudolf, Harald, 72072 Tübingen (DE); Meyer, Michael, 71063 Sindelfingen (DE); Zerrweck, Frank, 70376 Stuttgart (DE)

(56) Entgegenhaltungen:
- EP-A- 0 517 253
- DE-A- 3 942 011
- US-A- 5 430 649
- US-A- 5 461 567

## Beschreibung

Die Erfindung betrifft eine Auslöseschaltung für ein Insassen-Rückhaltesystem für Kraftfahrzeuge mit den Merkmalen des Oberbegriffs des Anspruchs 1 und ein für diese Auslöseschaltung geeignetes Verfahren mit den Merkmalen des Oberbegriffs des Anspruchs 5 (siehe US-A-5 461 567).

Aus der gattungsbildenden DE 39 42 011 A1 ist eine Auslöseschaltung für ein Insassen-Rückhaltesystem, insbesondere einen Fahrer-Airbag bekannt, bei dem das elektrische Beschleunigungssignal eines Beschleunigungsaufnehmers mit speziellen Integrationsverfahren mehrfach aufintegriert wird und zur Auslösung des Rückhaltesystems führt, falls bestimmte Schwellen gleichzeitig durch die verschiedenen Integrale überschritten werden. Diese Auslöseschaltung ist ausschließlich auf die Auslösung des Rückhaltesystems für den Fall eines Frontalaufpralls ausgelegt. Zwar weist die Auslöseschaltung einen Auswertekanal zur Erkennung eines Heckaufpralls auf, dieser dient aber dazu, eine Fehlauslösung des Rückhaltesystems bei einem Heckaufprall zu unterdrücken. Zur Erkennung eines Heckaufpralls wird eine Schwelle für das Integral des invertierten Beschleunigungssignals gesetzt.

Desweiteren ist in der 44 28 921 A1 ein Sicherheitsgurtsystem mit einer Blockiervorrichtung zum Blockieren des Sicherheitsgurtes bekannt, wenn das Kraftfahrzeug in eine Vorwärts- oder Rückwärtskollision verwickelt ist. Die Blockiervorrichtung wird von einem nicht weiter spezifizierten Kollisionsdetektor zum Erfassen einer Vorwärts- oder Rückwärtskollision angesteuert. Die Funktionsweise des Kollisionsdetektors, insbesondere die Auslösekriterien bei einer Rückwärtskollision sind nicht offenbart.

Bei einem Heckaufprall wird der Fahrzeuginsasse im wesentlichen durch zwei Effekte gefährdet: Beim Rampeneffekt gleitet nach einem Heckaufprall der Insasse entlang der Rückenlehne des Sitzes nach oben und kann mit dem Kopf am Dach anschlagen. Beim Abpralleffekt wird der Insasse nach Einfederung in die Rückenlehne des Sitzes nach vorne geschleudert und kann mit dem Kopf auf das Lenkrad aufschlagen. Durch Auslösung des Gurtstraffers kann die Verletzungsgefahr bei einem Heckaufprall vermindert werden, sofern der Gurtstraffer zum richtigen Zeitpunkt ausgelöst wird. Dies gilt stringenter für den Fall, daß auf den Heckaufprall ein Frontalaufprall mit Airbagauslösung folgt.

Aufgabe der Erfindung ist es, für eine Auslöseschaltung mit den Merkmalen des Oberbegriffs des Anspruchs 1 einen Auswertekanal mit einem geeigneten Verfahren bereitzustellen, mit dem ein kritischer Heckaufprall sicher erkannt werden kann und der Gurtstraffer zu einem Zeitpunkt ausgelöst wird, bei dem eine optimale Schutzwirkung erreichbar ist.

Diese Aufgabe wird hinsichtlich der Auslöseschaltung durch die Merkmale des Anspruchs 1 und hinsichtlich des Verfahrens durch die Merkmale des Anspruchs 5 gelöst, wobei die Merkmale der Unteransprüche vorteilhafte Aus- und Weiterbildungen kennzeichnen.

Vorteile der Erfindung gegenüber dem Stand der Technik bestehen darin, daß der Auslösezeitpunkt nicht an abstrakte Schwellen für Beschleunigungen oder Geschwindigkeiten gekoppelt ist, sondern als notwendiges Auslösekriterium die aus dem Beschleunigungssignal durch zweifache Integration berechnete Rückverlagerung des Insassen beim Heckaufprall herangezogen wird. Die Rückverlagerung beschreibt Positionsänderung des Insassen beim Aufprall und ist damit die primäre Größe bei der Beurteilung der Gefährdung des Fahrzeuginsassen. Desweiteren ist die Rückverlagerung eine anschauliche Größe, die aus Filmaufnahmen von Heckaufprallversuchen unmittelbar ablesbar ist.

Zwar ist aus der Literatur, insbesondere der oben genannten DE 39 42 011 A1 bekannt, die aus dem Beschleunigungssignal durch zweifache Integration berechnete Vorverlagerung des Insassen bei einem Frontalaufprall als Auslösekriterium für die Airbagauslösung mit heranzuziehen, doch hat sich dies in der Praxis nicht bewähren können. Aufgrund der langen Entfaltungszeit des Airbags muß bei einem Frontalaufprall die Auslöseentscheidung sehr früh getroffen werden, so daß der rechnerisch ermittelte Wert für die Vorverlagerung noch zu ungenau ist, um daran die Auslöseentscheidung koppeln zu können. Diese Problematik ist beispielsweise in der DE 43 30 486 A1 angesprochen. In den heutzutage vorwiegend eingesetzten Auslöseschaltungen wird daher davon Abstand genommen, die Vorverlagerung des Insassen zur Bestimmung des Auslösezeitpunktes heranzuziehen.

Beim Heckaufprall liegen jedoch andere Verhältnisse vor. Aus Filmaufnahmen von Heckaufprallversuchen läßt sich als optimales Auslösekriterium das Erreichen einer Rückverlagerung von ungefähr 400 mm ermitteln. Bei dieser Rückverlagerung hat die Rückverlagerungsbewegung des Insassen ihren Umkehrpunkt erreicht, so daß der Gurt vom Insassen maximal freigegeben ist und nach Auslösung des Gurtstraffers dessen Strafferweg maximal genutzt wird. Bei der anschließenden Phase des Zurückfederns in Richtung auf das Lenkrad wird der Insasse durch den gestrafften Gurt frühestmöglich zurückgehalten. Mit dem genannten Auslösekriterium ergeben sich je nach Aufprallgeschwindigkeit Auslösezeitpunkte im Bereich von 80 ms bis 120 ms.

Da die Zeit zwischen Auslösung und vollendetem Straffervorgang mit ungefähr 7 ms vergleichsweise kurz ist, kann für die in der Auslöseschaltung modellierte Rückverlagerungsbewegung als Auslösekriterium ohne Abzug ein Rückverlagerungs-Schwellwert von 400 mm angesetzt werden. Zum Auslösezeitpunkt befindet sich das aus dem Beschleunigungssignal durch zweifache Integration abgeleitete Wegsignal für die Rückverlagerung in seiner höchsten Steigung, so daß eine gute Genauigkeit und Reproduzierbarkeit des Auslösezeitpunkts erreicht wird. Mit dem in dieser Weise gebildete Auslösekriterium findet eine Auslösung des Gurtstraffers erst bei einem Heckaufprall mit einer Aufprallgeschwindigkeit von über 15 km/h statt. Bei einer niedrigeren Aufprallgeschwindigkeit erreicht das gebildeten Wegsignal den gesetzten Rückverlagerungs-Schwellwert von 400 mm nicht.

In einer vorteilhaften Weiterbildung ist als gleichzeitig zu erfüllendes Auslösekriterium die Überschreitung eines Geschwindigkeits-Schwellwertes durch das durch einfache Integration des Beschleunigungssignals abgeleitete Geschwindigkeitssignal vorgesehen. Dieses Signal charakterisiert den bei einem Heckaufprall erlittenen Geschwindigkeitszuwachs des Fahrzeugs und ist daher ein Maß für die Schwere des Heckaufpralls. Der Geschwindigkeitszuwachs erreicht seinen durch den Impulssatz für den uneleastischen Stoß gegebenen Endwert für mittlere Aufprallgeschwindigkeiten von ungefähr 30 km/h bereits bei ungefähr 80 msec, bei größeren Aufprallgeschwindigkeiten noch früher. Damit ist für die Fälle, bei denen eine Auslösung erwünscht ist, zu einem Zeitpunkt, bei dem der Rückverlagerungs-Schwellwert durch das Wegsignal überschritten wird, der maximale Geschwindigkeitszuwachs erreicht. Mit dem Geschwindigkeits-Schwellwert, welchen das Geschwindigkeitssignal im Auslösefall zu überschreiten hat, kann daher die Schwere des Heckaufpralls, ab der ausgelöst wird, genau und reproduzierbar festgelegt werden. Dies erlaubt eine scharfe Abgrenzung zu einem Heckaufprall mit niedriger Aufprallenergie. Der genaue Wert für den Geschwindigkeits-Schwellwert ist aus Filmaufnahmen zu Heckaufprallversuchen und dem Schadensbild der Versuchsfahrzeuge zu ermitteln.

Weitere Einzelheiten und vorteilhafte Weiterbildungen der Auslöseschaltung ergeben sich aus weiteren Unteransprüchen in Verbindung mit der folgenden Beschreibung.

Ein Ausführungsbeispiel der Erfindung ist in der Zeichnung dargestellt und wird nachstehend erläutert. Es zeigen:
- Fig. 1: die Auslöseschaltung für ein Insassen-Rückhaltesystem mit einem Auswertekanal zur Erkennung eines Heckaupralls,
- Fig. 2: ein Ausführungsbeispiel des erfindungsgemäßen Auswertekanal,

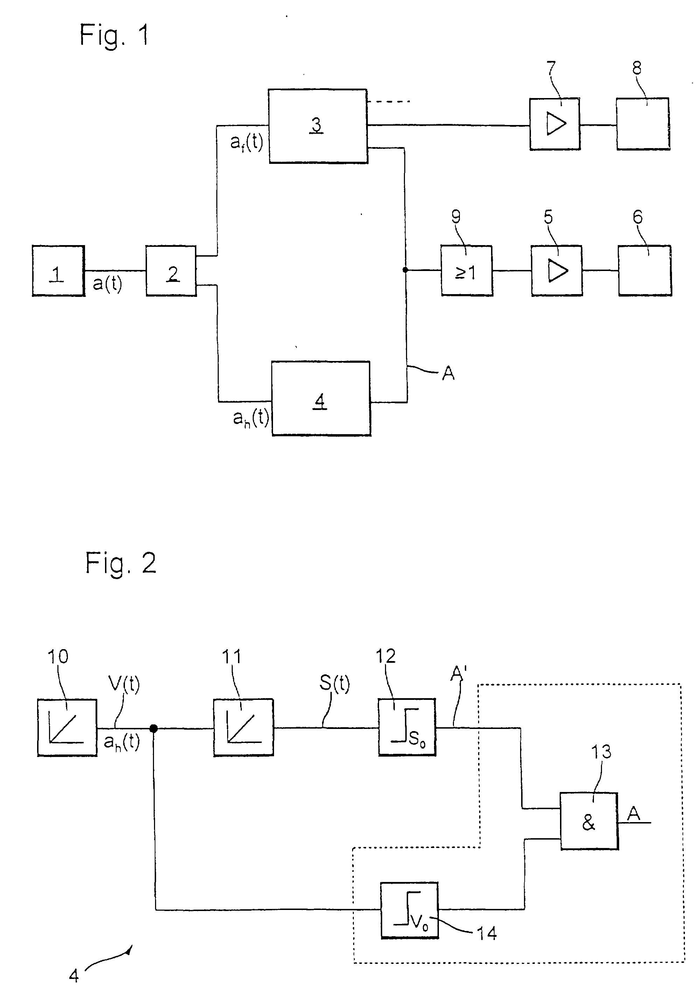

Der allgemeine Aufbau der Auslöseschaltung ist in einem Blockschaltbild in Fig. 1 gezeigt. Das Ausgangssignal a(t) eines Beschleunigungsaufnehmers 1 wird in einer Aufbereitungsstufe 2 in an sich bekannter Weise verstärkt, geglättet, begrenzt, und in geeigneter Weise in ein Heckaufprall-Beschleunigungssignal aₕ(t) und ein Frontalaufprall-Beschleunigungssignal a_{f}(t) aufgeteilt, beispielsweise mittels sich ergänzender unsymmetrischer Begrenzung. Da die bei einem Heckaufprall auftretenden Beschleunigungswerte typischerweise im Bereich von -5g bis 20g liegen und im im Mittel positiv sind, während die bei einem Frontalaufprall auftretenden Beschleunigungswerte im Mittel negativ sind, wird das Beschleunigungssignal für den Heckaufprall aₕ(t) invertiert ausgegeben. Damit können für die weitere Auswertung des Heckaufpralls die von der Auswertung des Frontalaufpralls her bekannten Maßnahmen und Schaltungen herangezogen werden. Für die Details der in der Folge verwendeten Verfahren zur Integration und Signalverarbeitung wird daher auf die bereits erwähnte DE 39 42 011 A1 verwiesen.

Das Frontalaufprall-Beschleunigungssignal a_{f}(t) wird einem Frontalaufprall-Auswertekanal 3 zugeführt und dort weiterverarbeitet. Der Frontalaufprall-Auswertekanal 3 arbeitet in an sich bekannter Weise und steuert bei einem kritischen Frontalaufprall eine dem Gurtstraffer 6 zugeordnete Endstufe 5 mit einem Auslösesignal an. Gegebenenfalls wird über eine zweite Endstufe 7 auch ein Fahrer-Airbag 8 angesteuert. Es können noch weitere Rückhalteeinrichtungen wie Beifahrer-Airbag oder Seiten-Airbag vorgesehen sein (gestrichelt angedeutet).

Das Heckaufprall-Beschleunigungssignal aₕ(t) wird einem Heckaufprall-Auswertekanal 4 zugeführt. Der Heckaufprall-Auswertekanal 4 arbeitet in der nachfolgend beschriebenen Weise und steuert bei einem kritischen Heckaufprall die dem Gurtstraffer 6 zugeordnete Endstufe 5 mit einem Auslösesignal A an. Dabei sind die der Endstufe 5 von den beiden Auswertekanälen 3, 4 vorgebbaren Auslösesignale über ein ODER-Glied 9 zusammengeführt.

Der Heckaufprall-Auswertekanal 4 zur Erkennung eines Heckaufpralls ist in Fig. 2 ausführlicher dargestellt und umfaßt in der einfachsten Ausführungsform eine Rückverlagerungs-Ermittlungsstufe 10, 11, mit der auf der Grundlage des bei einem Heckaufprall auftretenden Beschleunigungssignals aₕ(t) ein die Insassen-Rückverlagerung charakterisierendes Wegsignal s(t) ermittelbar ist..Der Rückverlagerungs-Ermittlungsstufe 10, 11 ist ein Weg-Schwellwertschalter 12 für das Wegsignal s(t) nachgeschaltet, welcher bei Überschreiten eines Rückverlagerungs-Schwellwertes s₀ durch das Wegsignal s(t) ein Hochsignal setzt. Im allgemeinen kann das Wegsignal s(t) durch zweifache Integration aus dem Beschleunigungssignal aₕ(t) gewonnen werden, wobei auch spezielle Integrationsverfahren mit gewichtetem Integranden oder mit Integrandenschwelle angewendet werden können, sofern der typische Signalverlauf des Beschleunigungssignals aₕ(t) dies erforderlich macht.

Im Ausführungsbeispiel erfolgt die Ermittlung der Rückverlagerung in zwei Stufe 10, 11. Zunächst wird das Beschleunigungssignal aₕ(t) einer ersten Integratorstufe 10 zugeführt, an deren Ausgang demzufolge ein Geschwindigkeitsignal v(t) ansteht, welches einer zweiten Integratorstufe 11 zugeführt wird. Am Ausgang der zweiten Integratorstufe 11 steht demzufolge ein Wegsignal s(t) an, welches die Rückverlagerung des Insassen bei einem Heckaufprall charakterisiert. Der optimale Wert für den Rückverlagerungs-Schwellwert s₀ kann aus Filmaufnahme von Heckaufprall-Versuchen ermittelt werden und ergibt sich zu ungefähr 400 mm. In der einfachsten Ausführungsform kann das Ausgangssignal A' des Weg-Schwellwertschalters 12 auf den Eingang des ODER-Gliedes 9 in Fig. 1 geführt werden und als Auslösesignal zur Ansteuerung der Endstufe 5 des Gurtstraffers 6 dienen. Sofern jedoch zusätzliche Auslösekriterien herangezogen werden sollen, ist das Ausgangssignal A' in der Weise zu verwenden, daß im Falle eines Heckaufpralls das Vorliegen eines Hochsignals am Ausgang des Weg-Schwellwertschalters 12 notwendig ist für die Ausgabe des Auslösesignals an den Gurtstraffer 6 über das ODER-Glied 9 und die zugeordnete Endstufe 5.

In der in Fig. 2 gestrichelt umrandet dargestellten vorteilhaften Weiterbildung wird das Ausgangssignal A' des Weg-Schwellwertschalters 12 auf ein ersten Eingang eines UND-Gliedes 13 geführt. Auf den zweiten Eingang des UND-Gliedes 13 ist das Ausgangssignal eines Geschwindigkeit-Schwellwertschalters 14 geführt, welcher ein Hochsignal setzt, wenn ein Geschwindigkeit-Schwellwert v₀ durch ein Geschwindigkeitssignal v(t) überschritten wird, welches den bei einem Heckaufprall auftretenden Geschwindigkeitszuwachs des Fahrzeugs charakterisiert. Mit dem UND-Glied 13 werden die Ausgangssignale des Weg-Schwellwertschalters 12 und des Geschwindigkeit-Schwellwertschalters 14 logisch in der Weise miteinander verknüpft, daß im Falle eines Heckaufpralls das Vorliegen beider Hochsignale notwendig ist für die Ausgabe des Auslösesignals zur Auslösung des Gurtstraffers. Im allgemeinen ist das Geschwindigkeitssignal v(t) in einer Geschwindigkeitszuwachs-Ermittlungsstufe auf der Grundlage des Heckaufprall-Beschleunigungssignals aₕ(t) durch Integration ermittelbar.

Im Ausführungsbeispiel kann das Geschwindigkeitssignal v(t) unmittelbar am Ausgang der ersten Integratorstufe 10 abgegriffen werden, welche daher die Geschwindigkeitszuwachs-Ermittlungsstufe bildet. Dieses Ausführungsbeispiel bietet die eingangs bereits dargestellten Vorteile, daß bei einem Heckaufprall eine Auslösung des Gurtstraffers nur dann erfolgt, wenn auch der durch einen Heckaufprall schlagartig erlittene Geschwindigkeitszuwachs ausreichend groß ist, wobei der optimale Auslösezeitpunkt durch das Kriterium der Insassen-Rückverlagerung bestimmt wird.

Damit bei Kräftefreiheit, was hier den normalen Fahrbetrieb mitumfaßt und bedeutet, daß die Beschleunigungswerte a(t) innerhalb eines Bandes von -2g bis +2g liegen, bei der Integralbildung in den beiden Integratorstufen 10, 11 die Werte nicht unbegrenzt ansteigen und die gesetzten Schwellen überschreiten, ohne daß jedoch ein Heckaufprall vorliegt, müssen geeignete Maßnahmen zur Rückstellung der Geschwindigkeit- und Wegsignale getroffen werden. Beispielsweise kann ein Abzug vom Weg mit einer konstanten Rate erfolgen, wobei eine Rate von 1 m/s ein realistischer Wert ist. Zu weiteren, das Problem der Rückstellung betreffenden Angaben wird auf die bereits genannte DE 43 30 486 A1 verwiesen.

Das in der Zeichnung gezeigte Blockschaltbild bezieht sich auf eine Verwirklichung der erfindungsgemäßen Auslöseschaltung mittels den Blöcken entsprechenden Schaltungskomponenten. Ohne weiteres ist der Erfindungsgedanke auch auf die Verhältnisse bei digitalen Auslösegeräte mit programmierbarem Auslösealgorithmus möglich, indem ensprechende Verfahrensschritte in den Auslösealgorithmus implementiert werden.

## Patentansprüche

1. Auslöseschaltung für ein Insassen-Rückhaltesystem für Kraftfahrzeuge mit mindestens einem Gurtstraffer zur Straffung eines einem Fahrzeugsitz zugeordneten Sicherheitsgurtes, wobei die Auslöseschaltung das Beschleunigungssignal eines Beschleunigungsaufnehmers auswertet und bei Erkennung eines kritischen Aufpralls ein Auslösesignal an den Gurtstraffer abgibt, wobei die Auslöseschaltung einen Auswertekanal (4) zur Erkennung eines Heckaufpralls aufweist, **dadurch gekennzeichnet, daß** der Auswertekanal (4) umfaßt:
- eine Rückverlagerungs-Ermittlungsstufe (10, 11), mit der auf der Grundlage des bei einem Heckaufprall auftretenden Beschleunigungssignals ein die Insassen-Rückverlagerung charakterisierendes Wegsignal ermittelbar ist und
- einen der Rückverlagerungs-Ermittlungsstufe nachgeschalteten Weg-Schwellwertschalter (12) für das Wegsignal, welcher bei Überschreiten eines Rückverlagerungs-Schwellwertes (s₀) durch das Wegsignal ein Hochsignal setzt, wobei im Falle eines Heckaufpralls das Vorliegen dieses Hochsignals notwendig ist für die Ausgabe des Auslösesignals (A) an den Gurtstraffer (6).

2. Auslöseschaltung nach Anspruch 1,
**dadurch gekennzeichnet,**
**daß** der Auswertekanal (4) weiterhin umfaßt:
- eine Geschwindigkeitszuwachs-Ermittlungsstufe (10), mit der auf der Grundlage des bei einem Heckaufprall auftretenden Beschleunigungssignals ein den Fahrzeug-Geschwindigkeitszuwachs charakterisierendes Geschwindigkeitssignal ermittelbar ist,
- einen der Geschwindigkeitszuwachs-Ermittlungsstufe (10) nachgeschalteten Geschwindigkeit-Schwellwertschalter (14) für das Geschwindigkeitssignal, welcher bei Überschreitung eines Geschwindigkeits-Schwellwertes (v₀) durch das Geschwindigkeitssignal ein Hochsignal setzt und
- ein UND-Glied (13), welches die Ausgangssignale des Weg-Schwellwertschalters (12) und des Geschwindigkeit-Schwellwertschalters (14) logisch in der Weise miteinander verknüpft, daß im Falle eines Heckaufpralls das Vorliegen beider Hochsignale notwendig ist für die Ausgabe des Auslösesignals (A) an den Gurtstraffer (6).

3. Auslöseschaltung nach Anspruch 1,
**dadurch gekennzeichnet,**
**daß** die Rückverlagerungs-Ermittlungsstufe aus einer ersten Integratorstufe (10) und einer nachfolgenden zweiten Integratorstufe (11) gebildet ist.

4. Auslöseschaltung nach Anspruch 2 und 3,
**dadurch gekennzeichnet,**
**daß** die Geschwindigkeitszuwachs-Ermittlungsstufe aus der ersten Integratorstufe (10) gebildet ist.

5. Verfahren für eine Auslöseschaltung für ein Insassen-Rückhaltesystem für Kraftfahrzeuge mit mindestens einem Gurtstraffer zur Straffung eines einem Fahrzeugsitz zugeordneten Sicherheitsgurtes, wobei das Beschleunigungssignal eines Beschleunigungsaufnehmers ausgewertet und bei Erkennung eines kritischen Aufpralls ein Auslösesignal an den Gurtstraffer abgegeben wird,
**dadurch gekennzeichnet,**
**daß** aus dem bei einem Heckaufprall auftretenden Beschleunigungssignal (aₕ(t)) mittels zweier Integrationen ein die Insassen-Rückverlagerung charakterisierendes Wegsignal (s(t)) ermittelt und mit einem Rückverlagerungs-Schwellwert (s₀) verglichen wird, wobei bei dessen Überschreitung die Ausgabe des Auslösesignals (A) an den Gurtstraffer (6) ermöglicht wird.

6. Verfahren nach Anspruch 5,
**dadurch gekennzeichnet,**
**daß** aus dem bei einem Heckaufprall auftretenden Beschleunigungssignal (aₕ(t)) mittels einer Integration ein den Fahrzeug-Geschwindigkeitszuwachs charakterisierendes Geschwindigkeitssignal (v(t)) ermittelt und mit einem Geschwindigkeits-Schwellwert (v₀) verglichen wird, wobei bei dessen Überschreitung und gleichzeitiger Überschreitung des Rückverlagerungs-Schwellwertes (s₀) durch das Wegsignal (s(t)), das Auslösesignal (A) an den Gurtstraffer (6) ausgegeben wird.

## Claims

1. Release circuit for a passenger retention system for vehicles with at least one belt tightener for tightening a vehicle seat safety-belt, whereby the release circuit evaluates the acceleration signal of an acceleration absorber and transmits a release signal to the belt tightener when it detects a critical impact, whereby the release circuit has an assessment channel (4) for detecting an impact on the rear of the vehicle, **characterized in that** the evaluation channel (4) comprises,
- a backward displacement ascertainment stage (10, 12), with which a displacement signal characterizing the backward displacement of the passenger can be determined on the basis of the acceleration signal arising at the time of a collision on the rear of the given vehicle and
- a displacement threshold value switch (12), connected in after the backward displacement ascertainment stage, for the displacement signal, which sets a high signal, when a backward displacement threshold (sₒ) is exceeded by the displacement signal, whereby, in the case of an impact on the rear of the given vehicle, the presence of this high signal is necessary for the supply of the release signal (A) to the belt-tightener (6).

2. Release circuit in accordance with claim 1,
**characterized in that**
the evaluation channel (4) further comprises
- a speed-increase determination stage (10) with which a speed signal, characterizing the increase in speed of the given vehicle, can be determined on the basis of an acceleration signal arising at the time of a collision impact against the rear of the given vehicle,
- a speed threshold switch (14), for the speed signal, connected in after the speed-increase determination stage (10), which sets a high signal when a threshold speed (vₒ) is exceeded by the speed signal and
- an AND component (13), which links the initial signal of the displacement threshold switch (12) and the speed threshold switch (14), in terms of logic, such that, in the case of a collision against the rear of a given vehicle, the presence of both high signals is necessary for the transmission of the release signal (A) to the belt tightener (6).

3. Release circuit in accordance with claim 1,
**characterized in that**
the backwards-displacement ascertainment stage is formed from a first integrator stage (10) and a subsequent, second integrator stage (11).

4. Release circuit in accordance with claims 2 and 3,
**characterized in that**
the speed-increase ascertainment stage is formed from the first integrator stage (10).

5. Process for a release circuit for a passenger-retention system for vehicles with at least one belt-tightener for tightening a safety-belt associated with a vehicle seat, whereby the acceleration signal is evaluated by an acceleration absorber and, when a critical level of impact is detected, a release signal is supplied to the belt-tightener,
**characterized in that**
a displacement signal (s(t)), characterizing the backwards-displacement of a passenger, is determined, from the acceleration signal (aₕ(t)) arising at the time of a rear collision, by means of two integrations, and the said displacement signal is compared with a threshold backwards-displacement value (sₒ), whereby, when the latter is exceeded, the transmission of the release signal (A) to the belt-tightener (6) is enabled.

6. Process in accordance with claim 5,
**characterized in that**
a speed signal (v(t)), characterizing the increase in speed of the given vehicle, is determined, from the acceleration signal (aₕ(t)) arising at the time of a rear collision, by means of an integration, and the said displacement signal is compared with a speed threshold (vₒ), whereby the release signal (A) is transmitted to the belt-tightener (6), when the speed threshold (vₒ) is exceeded and the backwards-displacement threshold (sₒ) is simultaneously exceeded by the displacement signal (s(t)).

## Revendications

1. Circuit de déclenchement pour système de retenue d'un occupant pour véhicules à moteur, comportant au moins un tendeur de ceinture pour tendre une ceinture de sécurité associée à un siège de véhicule, le circuit de déclenchement traitant le signal d'accélération d'un récepteur d'accélération et, s'il reconnaît un choc critique, envoyant un signal de déclenchement au tendeur de ceinture, le circuit de déclenchement présentant un canal de traitement (4) pour reconnaître un choc sur l'arrière,
**caractérisé par le fait que** le canal de traitement (4) comporte :
- un étage de détermination du déplacement vers l'arrière (10, 11) avec lequel, sur la base du signal d'accélération survenant en cas de choc sur l'arrière, un signal de parcours, caractérisant le déplacement de l'occupant vers l'arrière, peut être établi et
- un commutateur à valeur de seuil du parcours (12), monté en aval de l'étage de détermination du déplacement vers l'arrière, pour le signal de parcours, qui, en cas de dépassement, par valeur supérieure, d'une valeur de seuil de déplacement vers l'arrière (sₒ) par le signal de parcours, valide un signal haut, la présence de ce signal haut étant nécessaire en cas de choc sur l'arrière, pour l'envoi du signal de déclenchement (A) au tendeur de ceinture (6).

2. Circuit de déclenchement selon la revendication 1,
**caractérisé par le fait**
**que** le canal de traitement (6) comporte en outre :
- un étage de détermination de l'accroissement de vitesse (10) avec lequel, sur la base du signal d'accélération survenant en cas de choc sur l'arrière, un signal de vitesse caractérisant l'accroissement de vitesse du véhicule peut être établi,
- un commutateur à valeur de seuil de vitesse (14) monté en aval de l'étage de détermination de l'accroissement de vitesse (10), pour le signal de vitesse, qui, en cas de dépassement, par valeur supérieure, d'une valeur de seuil de vitesse (vₒ) par le signal de vitesse valide un signal haut et
- un élément ET (13) qui relie logiquement l'un avec l'autre les signaux de sortie du commutateur à valeur de seuil de parcours (12) et du commutateur à valeur de seuil de vitesse (14) de façon qu'en cas de choc sur l'arrière la présence des deux signaux hauts soit nécessaire pour l'envoi du signal de déclenchement (A) au tendeur de ceinture (6).

3. Circuit de déclenchement selon la revendication 1
**caractérisé par le fait**
**que** l'étage de détermination du déplacement vers l'arrière est formé d'un premier étage intégrateur (10) et d'un second étage intégrateur (11) monté à la suite.

4. Circuit de déclenchement selon les revendications 2 et 3,
**caractérisé par le fait**
**que** l'étage de détermination de l'accroissement de vitesse est formé du premier étage intégrateur (10).

5. Procédé pour un circuit de déclenchement pour système de retenue d'un occupant pour véhicules à moteur, comportant au moins un tendeur de ceinture pour tendre une ceinture de sécurité associée à un siège de véhicule, le circuit de déclenchement traitant le signal d'accélération d'un récepteur d'accélération et, s'il reconnaît un choc critique, envoyant un signal de déclenchement au tendeur de ceinture,
**caractérisé par le fait**
**qu'**à partir du signal d'accélération (aₕ (t)) survenant en cas de choc sur l'arrière, au moyen de deux intégrations est établi un signal de parcours (s (t)) caractérisant le déplacement de l'occupant vers l'arrière et qu'il est comparé à une valeur de seuil de déplacement vers l'arrière (sₒ), l'envoi du signal de déclenchement (A) au tendeur de ceinture (6) étant possible si cette valeur de seuil est dépassée par valeur supérieure.

6. Procédé selon la revendication 5,
**caractérisé par le fait**
**qu'**à partir du signal d'accélération (aₕ (t)) survenant en cas de choc sur l'arrière, au moyen d'une intégration est établi un signal de vitesse (v (t)) caractérisant l'accroissement de vitesse du véhicule et qu'il est comparé avec une valeur de seuil de vitesse (v₀), le signal de déclenchement (A) étant envoyé au tendeur de ceinture (6) si cette valeur de seuil est dépassée par valeur supérieure, et si, simultanément, la valeur de seuil du déplacement vers l'arrière (sₒ) est dépassée par valeur supérieure par le signal de parcours (s (t)).
